# DEMANDE DE BREVET EUROPEEN

(11) **EP 2 308 675 A1**
(43) Date de publication de la demande: **13.04.2011**
(21) Numéro de dépôt: 09171359.4
(22) Date de dépôt: 25.09.2009
(51) Int. Cl.: B32B 17/10, C09K 21/02

(54) **Couche de silicate alcalin "anti-feu"**

(71) Demandeur: AGC Glass Europe, 1170 Bruxelles (Watermael-Boitsfort) (BE)
(72) Inventeur: La désignation de l'inventeur n'a pas encore été déposée
(74) Mandataire: Le Vaguerèse, Sylvain Jacques

(57) **Abrégé**

L'invention concerne un procédé de production de couche de silicate alcalin hydraté pour vitrage "anti-feu" dans lequel une composition fluide préalablement préparée est appliquée sur une feuille de verre pour y subir un séchage à température et hygrométrie contrôlée jusqu'à obtention d'une couche solide présentant notamment les teneurs en eau recherchées, dans lequel le séchage en question est précédé d'une étape de déshydratation.

## Description

La présente invention concerne des vitrages transparents résistant au feu, et comprenant au moins une couche de matériau intumescent constitué de silicate alcalin.

L'utilisation des silicates alcalins répond à diverses nécessités. Il doit s'agir de matériaux qui offrent une bonne protection lorsque les vitrages sont exposés au feu. Ceci est obtenu par l'expansion sous forme d'une mousse réfractaire qui protège contre la propagation à la fois des flammes et du rayonnement. Les matériaux en question doivent aussi présenter une grande transparence avant toute exposition au feu. Ils doivent aussi ne présenter aucun défaut tel que voile ou bulle.

Si l'utilisation des matériaux intumescents à base de silicates alcalins hydratés est très communément adoptée, il reste que la préparation de ces couches de silicate pose toujours des problèmes délicats. Selon leur mise en oeuvre, les matériaux intumescents sont obtenus selon deux voies principales : par séchage d'une solution de ces silicates, ou par gélification spontanée d'une solution à forte concentration en matière sèche. Les matériaux obtenus dans les deux cas différent sensiblement en composition et en propriétés.

Les matériaux séchés sont en proportion moins riches en eau. Leur teneur se situe habituellement entre 25 et 38% en poids du matériau. Eventuellement une part de cette teneur en eau est remplacée par des additifs tels que des polyols à bas poids moléculaire, notamment de la glycérine ou l'éthylène glycol. Ces additifs améliorent notamment les propriétés mécaniques des vitrages en question. Ils peuvent aussi intervenir sur la qualité optique au vieillissement, la présence de ces additifs évite en partie la formation de bulles.

La formation des couches par séchage présente comme principal inconvénient une préparation longue et minutieuse. La solution de silicate avec ses additifs est répandue sur un support horizontal et l'ensemble est soumis à un séchage prolongé dans une enceinte balayée par un courant gazeux chaud dont l'hygrométrie est régulée. La durée de l'opération de séchage peut atteindre plusieurs dizaines d'heures. Le matériau séché et durci est assemblé dans un feuilleté avec les feuilles de verre du vitrage anti-feu. Le plus souvent l'une des feuilles de verre est utilisée comme support de la solution pendant l'étape de séchage.

Dans le mode comprenant la formation d'un gel qui durcit spontanément, éventuellement en élevant la température pour accélérer le processus, la composition est préparée sous forme d'une solution qui correspond à la constitution finale de la couche intumescente. Cette solution doit être préparée immédiatement avant la mise en oeuvre en raison de son évolution rapide vers un état solide.

Les compositions qui durcissent spontanément présentent une teneur en eau sensiblement plus élevée que celles préparées par séchage. Cette teneur n'est pas inférieure à 38% en poids. Si ces compositions permettent d'éviter les longues étapes de séchage, les produits obtenus diffèrent sensiblement de ceux obtenus par séchage. La différence de teneur en eau notamment conduit à des températures de fluage moins élevées. Par ailleurs ils ne peuvent être soumis à des températures très basses. Par ailleurs encore, les vitrages sont systématiquement réalisés avec des feuilles de verre préalablement trempées ce qui nécessite une mise à dimension dès l'origine.

Ces contraintes parmi d'autres font que les produits séchés continuent de représenter la part la plus importante des vitrages résistant au feu comportant des matériaux intumescents utilisés à ce jour.

Dans la pratique il convient encore de souligner certaines différences existant entre les principaux silicates utilisés à savoir les silicates de sodium d'une part, et les silicates de potassium d'autre part.

Les silicates de sodium sont plus sensibles au vieillissement et doivent subir les séchages les plus poussés. La teneur en eau est voisine de 25%, et pour compenser la dureté de la couche constituée la composition ordinairement incorpore une teneur relativement élevée en glycérine ou en ethylène-glycol. Les teneurs dans ces constituants « plastifiants » sont de l'ordre de 8 à 10% en poids de la solution conduisant à une teneur dans la couche séchée qui peut atteindre de l'ordre de 20%. La présence de ce constituant organique a plusieurs effets. D'une part l'amélioration de la plasticité confère au vitrage une meilleure résistance au choc dit « mou », mais d'autre part la présence abondante de ce composé organique n'améliore pas la résistance au feu. Un avantage des couches très fortement séchées est encore de résister aux températures très basses sans perte de leurs qualités optiques notamment de transparence.

Les silicates de potassium présentent pour leur part une meilleure résistance au vieillissement en présence d'une teneur en eau sensiblement plus élevée notamment de 30 à 38% en poids dans la couche, et à l'inverse, ont tendance à développer un trouble (« haze ») lorsque l'on essaie de diminuer cette teneur en eau. Parallèlement ces silicates de potassium, en raison même de cette teneur en eau plus élevée offrent une résistance au feu améliorée. Leur plasticité étant également meilleure, l'addition d'additifs du type glycérine ou éthylène glycol, est ordinairement en quantité moindre. Elle est de l'ordre de 2 à 5% dans les compositions initiales et ne dépasse pas 8% dans les couches préparées.

L'invention a pour but de proposer un nouveau mode de préparation des matériaux intumescents à base de silicate alcalin hydratés qui permette d'écourter les étapes de séchage de façon significative, sans perdre le bénéfice des propriétés propres aux matériaux obtenus par séchage. Un autre but de l'invention est de permettre la préparation de vitrages comportant des matériaux intumescents en couches éventuellement plus épaisses que précédemment.

Les opérations de séchage sont conduites sur une solution répandue sur une surface correspondant à celle du film à obtenir. La durée du séchage est d'autant plus importante que la solution est appliquée en une nappe plus épaisse. Le temps nécessaire croît de manière beaucoup plus que proportionnelle que ne varie l'épaisseur de la nappe. Les mécanismes d'équilibre entre le flux gazeux de séchage et la solution sont commandés non seulement par les phénomènes d'interface mais aussi par les équilibres qui s'opèrent au sein même de la nappe de solution.

Les inventeurs ont établi qu'il est possible de substituer avantageusement à une part importante des opérations séchage une opération de déshydratation conduite sur la solution avant son application sur le support sur lequel s'effectue la prise en masse.

L'avantage de la déshydratation de la solution est de disposer de moyens supplémentaires permettant d'accélérer considérablement l'élimination de l'eau de la composition initiale. Dans les processus de séchage traditionnels les paramètres disponibles sont essentiellement les conditions hygrométriques et de température du flux gazeux de l'enceinte de séchage. En effectuant la déshydratation de la solution, la pression constitue un facteur supplémentaire disponible. L'élimination d'eau de la composition initiale est d'autant plus rapide que l'opération est effectuée en atmosphère dont la pression est la plus réduite possible.

Il est possible selon l'invention d'effectuer l'opération de déshydratation à partir de solutions habituellement utilisées dans les modes de préparation utilisant le séchage. Pour ces solutions on s'efforce normalement de limiter la teneur en eau initiale de façon à minimiser le temps de séchage. En pratique ces solutions ont une teneur qui ne dépasse pas 60% en poids d'eau, et le plus souvent la teneur en eau n'est pas supérieure à 55% en poids. Ces teneurs en eau sont en partie liées aux rapports molaires des silicates utilisés. Il est bien connu que la teneur en eau des silicates disponibles dans le commerce est d'autant plus élevée que le rapport molaire est lui-même plus élevé. A titre indicatif, pour des compositions de rapport molaire de l'ordre de 4-5, la teneur en eau initiale des compositions soumises à séchage n'est pas habituellement inférieure à 45%. Pour des rapports molaires plus élevés la teneur en eau est nécessairement plus élevée.

Les solutions de silicates alcalins utilisées sont soit des solutions disponibles dans le commerce soit des préparations faites à partir de réaction d'hydroxyde alcalin et de silice colloïdale en suspension aqueuse, soit encore en utilisant une combinaison de ces matières premières. Dans le cas des silicates de sodium la préférence est d'utiliser autant que possible des solutions commerciales. Pour les solutions de silicate de potassium les produits de réaction de l'hydroxyde et de la silice sont préférés.

La mise en oeuvre d'une étape de déshydratation, en accélérant l'élimination de l'eau, permet de réduire la contrainte liée à la teneur en eau initiale. Il est possible de traiter des solutions dont la teneur en eau initiale est supérieure à 60% en poids, sans que le coût de l'opération soit rédhibitoire. En conséquence l'opération de déshydratation facilite également le traitement des compositions dont les rapports molaires sont les plus élevés envisagés, notamment des rapports de l'ordre de 5 à 7. De façon générale, les solutions de silicates utilisées présentent un rapport molaire compris entre 3 et 7 et, de préférence compris entre 3 et 5.

La déshydratation conduisant à une élimination d'eau dans des conditions avantageuses, il est souhaitable de poursuivre cette opération le plus possible de telle sorte que l'étape de séchage qui lui fait suite soit la plus réduite possible, et donc également la plus courte possible.

Le degré de déshydratation qui peut être obtenu est déterminé par la stabilité du produit déshydraté. Cette stabilité dépend elle-même de la composition, notamment du rapport molaire mais aussi de la température du produit. Les compositions déshydratées sont normalement utilisées immédiatement pour l'étape suivante de séchage. Dans cet état intermédiaire la composition évolue d'autant plus rapidement vers un gel plus ou moins solide que la teneur en eau est plus réduite. En conséquence, en réduisant le délai séparant la déshydratation de la mise en oeuvre de la composition déshydratée il est possible de maximiser l'élimination d'eau au cours de cette opération de déshydratation. A l'inverse dans l'hypothèse où il est souhaitable de pouvoir conserver la composition un temps relativement long après cette opération, ou encore lorsque l'on préfère maintenir la solution dans une viscosité relativement faible pour une certaine facilité d'application, la teneur en eau peut être maintenue dans les limites supérieures indiquées.

Dans la pratique, compte tenu des modalités de la déshydratation et du temps utile pour l'application de la composition déshydratée, la teneur en eau du produit déshydraté se situe avantageusement entre 35 et 42% en poids, et le plus souvent entre 38 et 40% la teneur en eau comme précédemment étant d'autant moins élevée que le rapport molaire des silicates est lui-même moins élevé.

Comme indiqué précédemment parallèlement à la teneur en eau, les compositions soumises à ces opérations renferment avantageusement des composés de type polyols, notamment de la glycérine ou de l'éthylène glycol. Pour les produits séchés mais destinés à présenter des teneurs relativement élevée en eau, la teneur en polyols est de préférence limitée. Dans la composition initiale elle ne dépasse pas de préférence 5%.

Parvenu aux teneurs en eau indiquées précédemment, il va de soi que le séchage ultérieur est considérablement réduit s'agissant comme indiqué de parvenir à une teneur en eau finale de 25 à 38% en poids, là encore selon les rapports molaires choisis. La réduction de la teneur en eau à partir du produit déshydraté n'excède pas 15% et de préférence reste inférieure à 10%.

Après le séchage complet les teneurs en produits polyols sont avantageusement de l'ordre de 2 à 10% et de préférence de 3 à 6%.

Comme indiqué précédemment la composition du produit intermédiaire doit tenir compte des conditions dans lesquelles l'opération de déshydratation est conduite. La température est un facteur important qui tend à figer la composition si elle s'élève trop. Pour éviter ce risque l'opération de déshydratation est conduite de préférence en maintenant la composition à une température qui ne dépasse pas 60°C et de préférence qui ne dépasse pas 50°C.

L'important est également que le temps pendant lequel la composition déshydratée se trouve à ces températures soit bien contrôlé. En pratique la mise en oeuvre du produit déshydraté est réalisé le plus tôt possible, mais pour des nécessités pratiques, il faut compter que le produit soit à même de demeurer dans des conditions rhéologique adéquates pendant un temps qui n'est pas inférieur à 15 minutes et de préférence pas inférieur à 30 minutes.

La consistance du produit doit permettre notamment l'application en une couche d'épaisseur uniforme sur un support plan constitué le plus habituellement par une des feuilles de verre du vitrage anti-feu. Pour permettre un étalement convenable, la viscosité du produit déshydraté est avantageusement inférieure à 50 Pa.s, et de préférence inférieure à 10 Pa.s. Si la viscosité est supérieure à ces limites le produit ne prend pas de lui même l'épaisseur uniforme recherchée. Il est néanmoins possible d'utiliser des compositions plus visqueuses à condition de prévoir des moyens permettant d'égaliser l'épaisseur sur toute la surface. Ces moyens sont par exemple un rouleau ou un racloir. Néanmoins dans la mesure du possible il reste préférable de faire en sorte que la distribution homogène soit obtenue par simple écoulement du produit sur la surface du substrat. Ceci permet d'éviter l'introduction accidentelle de défauts tels que des bulles en surface.

L'étape de déshydratation est avantageusement aussi brève que possible. Pour cela, et compte tenu des limitations de température imposées par l'évolution des compositions traitées, il est avantageux de procéder à l'élimination de l'eau en opérant en atmosphère sous pression réduite. La pression au dessus de la composition est avantageusement de 1 à 100hPa et de préférence de 10 à 50hPa. Plus la pression est réduite plus rapide est l'élimination de l'eau. Néanmoins le choix de la pression de traitement tient compte nécessairement d'impératifs économiques. Plus la pression est réduite, plus l'appareillage est coûteux en investissement et en fonctionnement. Les valeurs choisies font donc un bon compromis d'efficacité et de coût en ayant recours à des appareillages relativement communs pour d'autres applications.

Les appareillages utilisés pour conduire à une déshydratation rapide conduisent la composition sous une forme présentant une surface d'échange aussi grande que possible et sous faible épaisseur. Dans les appareillages usuels la composition est appliquée sous forme d'un film mince et qui se renouvelle en continu. Ceci est obtenu par un mouvement d'un système d'application de la composition sur les parois de l'appareillage dans des conditions dont des exemples sont donnés dans la suite de la description.

La pression réduite est maintenue en permanence au moyen de pompes, et l'eau évaporée est condensée dans le circuit de pompage.

La mesure de la teneur en eau résiduelle dans la composition soumise à la déshydratation peut être faite à partir de la quantité d'eau condensée. Il est important de connaître avec une bonne précision la teneur en eau résiduelle afin de ne pas risquer la gélification anticipée de la composition par une déshydratation trop poussée.

L'opération de déshydratation peut être conduite par lots de quantités fixes. Elle est menée de préférence en continu.

Les inventeurs ont également mis en évidence que préalablement à la déshydratation il était souhaitable de procéder à une maturation des compositions lorsque celles-ci sont obtenues par réaction d'hydroxyde et de suspensions de silice colloïdale. En l'absence de cette maturation il est difficile de prévenir la formation de bulles dans le produit final. Il est supposé que l'origine de ces bulles est la présence de gaz adsorbé et/ou inclus dans les particules de silice. La maturation permet de disloquer les particules de silice de façon à libérer l'air inclus avant de soumettre la composition à la déshydratation. Il est apparu particulièrement efficace de procéder à une vigoureuse opération de cisaillement de la composition qui peut être de durée relativement restreinte, au plus quelques minutes, et de préférence en élevant la température sans toutefois excéder les limites conduisant à une gélification prématurée. Pour éviter ce risque il est préférable de ne pas dépasser 60°C.

De façon surprenante en effet le dégazage qui s'opère automatiquement au cours de la déshydratation sous pression réduite ne permet pas l'élimination complète des gaz adsorbés dans ces particules de silice. La maturation sous agitation effectuée sous pression ordinaire, à l'inverse, conduit par un mécanisme non entièrement élucidé, à la suppression pratiquement complète de toute formation de bulle.

Après déshydratation la composition est appliquée sur un support plan pour former une couche uniforme et l'ensemble est soumis à une opération de séchage. Cette opération est conduite de façon contrôlée en appliquant un cycle de température et d'hygrométrie bien défini. Le cycle suivi est fixé de telle sorte que l'élimination de l'eau se fasse sans induire la formation de défauts. Il faut éviter notamment l'apparition de bulles ou d'irrégularités de surface qui compromettraient la qualité optique des vitrages. On prévient ces défauts en faisant en sorte que la température appliquée soit élevée progressivement et simultanément en augmentant le taux d'humidité maintenu dans l'atmosphère au contact de la couche de composition. Après un passage à un palier de température qui reste toujours inférieur à 100°C, la température est ramenée progressivement à la normale et simultanément le taux d'humidité est réduit.

Pour éviter tout risque d'évaporation brutale il est préférable que la température au cours du cycle ne dépasse pas 90°C.

Le séchage est réalisé de préférence sous pression atmosphérique ordinaire ce qui permet d'opérer soit dans des enceintes de grand volume soit dans des fours étendus en longueur et nommés fours "tunnels". Les supports comportant le matériau à sécher passent dans ces derniers qui reproduisent au long de leur trajet les conditions, au moins de température, des cycles indiqués ci-dessus.

Le temps de séjour dans l'enceinte ou four de séchage, est d'autant plus bref que la quantité d'eau à éliminer est moindre. Ce temps peut se limiter à quelques heures, voire à une heure, ou moins, étant entendu qu'une part significative est consacrée à la montée et à la descente progressive en température.

Même en ajoutant le temps de l'opération de déshydratation qui est très bref, il apparaît clairement que la combinaison de la déshydratation et du séchage est sensiblement plus courte que dans le cas du matériau intumescent préparé entièrement par séchage des procédés antérieurs pour parvenir à des couches d'épaisseur et de composition équivalentes.

La rapidité de l'ensemble du traitement selon l'invention permet aussi la constitution de couches plus épaisses. Précédemment en pratique les couches préparées ne dépassaient pas 3mm d'épaisseur, et le plus souvent se limitaient à 2mm. Pour des couches plus épaisses il était usuel d'accoler deux couches l'une sur l'autre. Mais même dans ce cas l'épaisseur restait relativement limitée. Pour parvenir aux performances anti-feu les plus élevées les produits antérieurs comportaient en conséquence une multiplicité de couches intumescentes et donc également de feuilles de verre séparant ces couches. Ces produits étaient donc à la fois coûteux, volumineux et pesants.

Les couches de silicates alcalins préparées selon l'invention peuvent ainsi atteindre des épaisseurs aussi importantes que 10mm. Le plus souvent les couches préparées se situent entre 1 et 8mm, ceci pour des couches obtenues par passage dans une enceinte de séchage à atmosphère contrôlée.

Les couches séchées en continu dans des fours tunnels sont souvent un peu moins épaisses lorsque dans les techniques antérieures le séchage doit être relativement important. Le temps de séjour dans le four tunnel ne peut pas être très prolongé et donc pour atteindre le degré de séchage souhaité, il est nécessaire d'opérer sur des couches peu épaisses. Le temps de séjour dans la technique selon l'invention reste court mais le complément de séchage est beaucoup plus limité et l'on retrouve une possibilité de procéder avec des couches relativement épaisses. Il est possible ainsi de préparer des couches encore importantes allant également jusqu'à 10mm. Des couches peu épaisses de 0,8mm par exemple, sont également possible. Lorsqu'il s'agit de former un film qui est détaché de son support de séchage avant d'être appliqué dans les structures feuilletées du vitrage, il est aussi préféré de conserver une certaine épaisseur pour la cohésion du matériau notamment lors de la séparation du support de séchage. Aussi des épaisseurs de 4 à 6mm sont préférées.

La possibilité de préparer dans des conditions économiques des couches à faible teneur en eau et d'épaisseurs importantes, conduit à des produits de performances équivalentes mais de coût et de poids moindres.

A titre d'exemple de mise en oeuvre de l'invention une solution de silicate alcalin est préparée en faisant réagir une suspension de silice colloïdale à 50% en poids d'eau avec une solution d'hydroxyde de potassium à 42% d'oxydes de potassium. Le mélange effectué comprend 67,19kg de suspension de silice et 26, 02kg de solution d'hydroxyde de potassium.

Au produit de la réaction précédente on ajoute 3,15kg d'éthylène glycol et 3,16 kg de tétraméthyl-hydroxy-ammonium (TMHA). La solution de 71,1litres et 99,57kg a une teneur en eau qui s'établit à 51% en poids.

Cette solution est déshydratée dans un appareil à film raclé opérant sous pression réduite de 30hPa, en maintenant la température à 50°C. L'appareil pilote utilisé est fabriqué par la société UIC.

Le passage en 1h30 permet de ramener la composition à une teneur en eau de 40%. Cette composition récupérée est appliquée sur des feuilles de verre selon les modalités des techniques de séchage traditionnelles.

La composition déshydratée est appliquée sur une feuille de verre de 3mm en une épaisseur de 4,5mm. L'ensemble est introduit dans une étuve et soumis au cycle de traitement suivant :
- montée en température progressive jusqu'à 50°C avec un taux d'humidité maintenu à 70%, durée 80 minutes ;
- montée en température jusqu'à 80°C avec un taux d'humidité de 80% en 80 minutes et palier pendant 40 minutes;
- décroissance progressive de la température et du taux d'humidité pour retour aux conditions de départ en 120 minutes.

La teneur en eau dans la couche après séchage s'établit à 33%.

La feuille de verre revêtue de la couche de silicate séchée est assemblée avec une deuxième feuille de verre de 3mm d'épaisseur. L'assemblage est réalisé par calandrage sous une pression de 200kPa. Pour assurer un bon contact de la couche intumescente avec la feuille de verre complétant le vitrage, un film d'un mélange de glycérine et d'eau (75/25%) est préalablement appliqué sur la face de cette feuille en contact avec cette couche.

Après calandrage l'assemblage est passé à l'autoclave à une température de 70°C et sous pression de 1300kPa.

Le vitrage constitué est soumis à une épreuve de résistance au feu suivant la norme EN 1363. Les performances obtenues classent ce vitrage EI 45 et EW>75. Ces performances sont supérieures à celles des produits équivalents obtenus par une opération de séchage traditionnelle. Une raison de cette amélioration est certainement le fait que la couche intumescente est un peu plus épaisse (4,5mm au lieu de 3mm). Une autre raison est probablement le fait que la couche présente une très grande homogénéité de composition. Une mesure de la teneur en eau dans l'épaisseur de la couche ne fait pas apparaître de variation de plus de 0,1%. A l'opposé la couche obtenue par séchage montre clairement un gradient de teneur en eau, la surface au contact de l'atmosphère pendant la phase de séchage est sensiblement plus sèche. Cette meilleure distribution de l'eau dans la couche permet une expansion plus régulière à l'épreuve du feu et par suite une meilleure isolation.

Le vitrage est aussi soumis à une épreuve de vieillissement accéléré. Il est porté à 80°C pendant 21 jours. Il n'apparaît pas de voile décelable. La mesure reste inférieure à 1%.

Le vitrage est aussi testé pour sa résistance aux températures les plus basses. Aucun effet négatif n'apparait jusqu'à la température de - 18,5°C.

Divers types d'appareillages peuvent être utilisés pour effectuer l'opération de déshydratation. Le choix de ces appareillages est en partie fonction des volumes traités et de la nécessité qui en résulte de procéder de façon continue ou non.

Comme indiqué précédemment pour mener cette opération le plus rapidement possible, la composition est étalée en faible épaisseur et soumise à une pression réduite. L'application sous faible épaisseur est obtenue par une application continue sur la paroi de l'appareillage en maintenant un mouvement relatif de la paroi avec la composition. Le mouvement relatif est avantageusement de rotation, et à cet effet la surface du dispositif dans lequel la déshydratation est effectuée, présente une forme ordonnée suivant un axe de révolution. Il s'agit de préférence d'une forme principalement cylindrique ou tronconique.

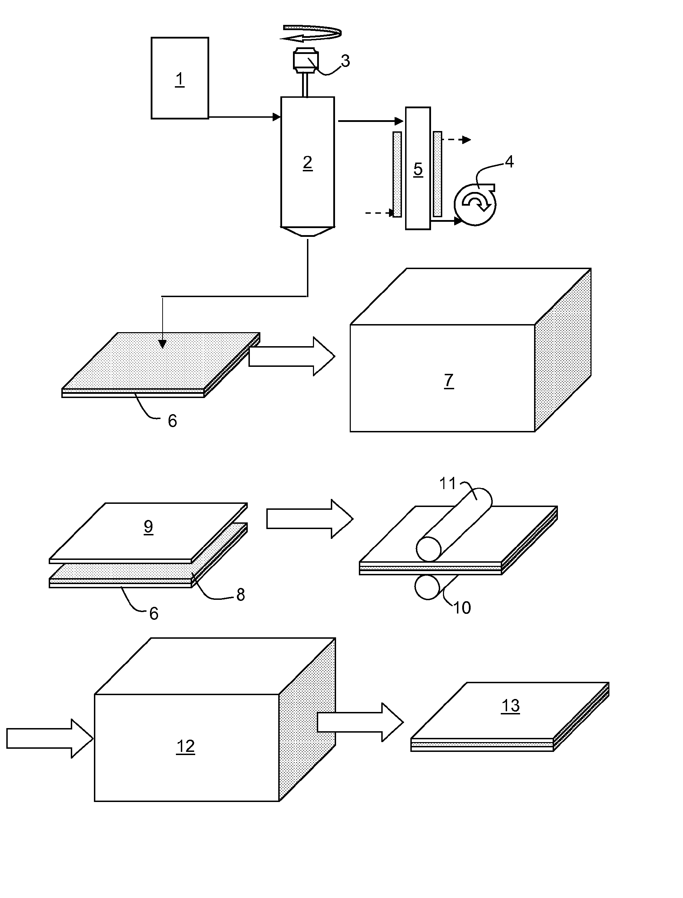

La figure jointe présente de façon schématique un diagramme de production selon l'invention.

La composition préparée est d'abord soumise à déshydratation dans une installation dont les éléments principaux sont une cuve de stockage 1 de la composition initiale.

La composition peut être préparée en continu. Mais dans la mesure où une maturation de plusieurs heures est préférée, la préparation en lots est souvent plus commode.

La composition est envoyée par des moyens non représentés vers un évaporateur 2. L'alimentation de l'évaporateur est continue.

La composition passant sur les parois de l'évaporateur 2, est entrainée en un mouvement par un rotor animé par un moteur 3.

La composition s'écoule le long des parois internes de l'évaporateur en perdant une partie de sa teneur en eau. La composition déshydratée est récupérée en partie basse de l'évaporateur. Elle est ensuite acheminée jusqu'à son lieu d'utilisation.

Les parois de l'évaporateur sont chauffées de manière à maintenir la composition aux températures choisies pour favoriser la déshydratation. Pour accélérer la déshydratation l'enceinte de l'évaporateur est maintenue sous pression partielle entretenue à partir d'un système de pompe représenté en 4.

Le pompage conduit également l'eau de déshydratation depuis l'enceinte de l'évaporateur 2 vers le condenseur 5. Le condenseur est refroidi par exemple par circulation de fluide de réfrigération symbolisée par les flèches en tirets.

La composition partiellement déshydratée est rapidement appliquée en une couche uniforme sur un support, représenté schématiquement par une feuille de verre 6. L'ensemble est introduit dans une enceinte de séchage 7.

Après que la couche de matériau intumescent 8 ait été séchée, on procède à l'assemblage avec une deuxième feuille de verre 9. Dans le schéma il s'agit dans un premier temps d'un calandrage symbolisé par les rouleaux 10 et 11. Cette opération solidarise les différents éléments et permet d'évacuer l'air qui peut demeurer entre la couche 8 et la feuille 9.

La préparation du vitrage s'achève par passage dans l'étuve 12 qui fixe définitivement les constituants du vitrage 13.

## Revendications

1. Procédé de production de couche de silicate alcalin hydraté pour vitrage "anti-feu" dans lequel une composition fluide préalablement préparée est appliquée sur une feuille de verre pour y subir un séchage à température et hygrométrie contrôlée jusqu'à obtention d'une couche solide présentant notamment les teneurs en eau recherchées, dans lequel le séchage en question est précédé d'une étape de déshydratation.

2. Procédé selon la revendication 1 dans lequel la composition de silicate alcalin soumise à déshydratation présente initialement une teneur en eau pondérale qui n'excède pas 60% et de préférence pas 55%.

3. Procédé selon l'une des revendications précédentes dans lequel la composition de silicate alcalin soumise à déshydratation présente un rapport molaire SiO₂/M₂O compris entre 3 et 7 et de préférence compris entre 3 et 5.

4. Procédé selon l'une des revendications précédentes dans lequel la déshydratation est conduite de manière à ramener la teneur en eau de la composition entre 35 et 42% en poids.

5. Procédé selon l'une des revendications précédentes dans lequel la déshydratation est effectuée sous vide partiel, la pression étant maintenue entre 1 et 100hPa et de préférence entre 10 et 50hPa.

6. Procédé selon l'une des revendications précédentes dans lequel la déshydratation est effectuée la composition étant maintenue à une température qui ne dépasse pas 60°C et de préférence qui ne dépasse pas 50°C.

7. Procédé selon l'une des revendications précédentes dans lequel la composition déshydratée est appliquée sous forme d'une couche sur un substrat horizontal et est soumise à un séchage dans une étuve dans laquelle circule un courant gazeux à température et hygrométrie contrôlées.

8. Procédé selon la revendication 7 dans lequel au cours du séchage la température suit un cycle qui n'excède pas 90°C.

9. Procédé selon l'une des revendications 7 ou 8 dans lequel la composition est appliquée sur une feuille de verre qui constitue une feuille du vitrage résistant au feu final.

10. Procédé selon l'une des revendications 1 à 6 dans lequel la composition est appliquée sous une épaisseur comprise entre 1 et 10mm et de préférence sous une épaisseur de 1 à 8mm.

11. Procédé selon l'une des revendications 1 à 6 dans lequel la composition préalablement déshydratée est appliquée en continu sur un support constitué d'un convoyeur lequel circule dans une étuve de type tunnel.

12. Procédé selon la revendication 11 dans lequel la composition est appliquée sous une épaisseur comprise entre 0,8 et 10mm et de préférence de 4 à 6mm.

13. Procédé selon l'une des revendications 11 ou 12 dans lequel après séchage la composition est séparée de son support pour être appliquée sur une feuille de verre.

14. Vitrage anti-feu comprenant au moins une couche de silicate alcalin hydraté présentant les caractéristiques des couches préparées par le procédé selon l'une des revendications précédentes.
